# EUROPÄISCHE PATENTSCHRIFT

(11) **EP 3 033 824 B1**
(45) Veröffentlichungstag und Bekanntmachung des Hinweises auf die Patenterteilung: **17.07.2019**
(21) Anmeldenummer: 14742220.8
(22) Anmeldetag: 24.07.2014
(51) Int. Cl.: H02K 5/22, H02K 26/00, H02K 5/26, B60G 21/055, H02G 11/02, B60R 16/02

(54) **ELEKTROMECHANISCHER STELLANTRIEB**
ELECTROMECHANICAL ACTUATING DRIVE
MÉCANISME DE COMMANDE ÉLECTROMÉCANIQUE

(30) Priorität: 12.08.2013 DE 102013215859
(43) Veröffentlichungstag der Anmeldung: 22.06.2016
(73) Patentinhaber: ZF Friedrichshafen AG, 88046 Friedrichshafen (DE); Dr.Ing. h.c. F. Porsche Aktiengesellschaft, 70435 Stuttgart (DE)
(72) Erfinder: PFEIFFER, Daniel, 88276 Berg (DE); HOFFMANN, Martin, 88048 Friedrichshafen (DE); KHANLAROV, Jafar, 71296 Heimsheim (DE); PALECZEK, Josef, 75233 Tiefenbronn (DE)
(74) Vertreter: Patentanwälte ter Smitten Eberlein-Van Hoof Rütten Partnerschaftsgesellschaft mbB
(86) Internationale Anmeldenummer: PCT/EP2014/065863
(87) Internationale Veröffentlichungsnummer: WO 2015/022158

(56) Entgegenhaltungen:
- EP-A2- 1 746 708
- WO-A1-02/061922
- DE-A1-102008 041 329
- DE-U1-202004 002 254
- FR-A1- 2 925 619
- JP-A- H0 919 127
- US-A1- 2007 210 666
- US-A1- 2008 106 055
- US-A1- 2011 005 264

## Beschreibung

Die Erfindung betrifft gemäß dem Oberbegriff des Patentanspruchs 1 einen elektromechanischen Stellantrieb, bei welchem ein Außengehäuse, ein Teil desselben und/oder ein drehfest mit dem Außengehäuse verbundenes zylindrisches Bauelement eine Drehbewegung um seine Längsmittelachse ausführt, wobei ein aus zumindest einer elektrischen Zuleitung und/oder elektrischen Steuerleitung bestehender Kabelstrang an seinem ersten Ende mit einem am Außengehäuse vorgesehenen ersten Anschluss und an seinem zweiten Ende mit einem zweiten ortsfesten Anschluss verbunden ist, wobei das erste Ende des Kabelstranges im Bereich des ersten Anschlusses tangential oder konzentrisch zu einer Außenmantelfläche des Außengehäuses oder des mit diesem drehfest verbundenen zylindrischen Bauelements verläuft, dessen Außendurchmesser gegenüber dem des Außengehäuses reduziert ist, so dass eine Anordnung des ersten Anschlusses und des Kabelstranges die radialen Abmessungen des elektromechanischen Stellantriebes aufgrund der Anordnung des Kabelstranges nicht vergrößert und dass sich der Kabelstrang, ausgehend von diesem Bereich, konzentrisch mit radialem Abstand zur Außenmantelfläche erstreckt, derart, dass ein Aufweiten bzw. Zusammenziehen einer um das Außengehäuse oder das zylindrische Bauelement verlaufende Schlinge des Kabelstrangs möglich ist, wobei die zumindest eine elektrische Zuleitung und/oder elektrische Steuerleitung jeweils in einer durch den ersten Anschluss verlaufenden Querebene des Außengehäuses oder des zylindrischen Bauelements angeordnet ist oder ausgehend von dem genannten Bereich den Verlauf einer Helix aufweist.

Elektromagnetische Stellantriebe, bei denen ein mit einer elektrischen Zuleitung oder mit Steuerleitungen versehenes Bauelement eine Drehbewegung ausführt, sind aus einer Vielzahl von Anwendungen bekannt. Es kann sich dabei beispielsweise um Anwendungen aus der Robotertechnik, aus der Werkzeugmaschinentechnik oder aus der Kraftfahrzeugtechnik handeln. In modernen Kraftfahrzeugen mit einer aktiven Fahrwerksregelung werden Wankstabilisatoren mit jeweils einer der Radaufhängungen zugeordneten Stabilisatorenhälften verwendet, wobei diese in einem Außengehäuse geführt sind und zum Ausgleich von Wankbewegungen des Fahrzeugaufbaus über den als Aktuator dienenden Stellantrieb zueinander verdreht werden können.

Dabei besteht der Aktuator aus einem Elektromotor, dem aus einer Regeleinrichtung Stellsignale wie z.B. ein Sollwert eines Drehwinkels und eine erforderliche Drehrichtung zugeführt werden, und aus einem mit dem Elektromotor verbundenen hochübersetzten Getriebe, mit welchem die Drehzahl des Elektromotors auf eine vorgegebene Drehzahl des Stellantriebes reduziert wird. Außerdem werden beispielsweise aus einer dem Getriebe zugeordneten Messeinrichtung Istwerte eines Drehwinkels auf die Regeleinrichtung übertragen. Aus diesem Grund sind von der ortsfest am Fahrzeugchassis angeordneten Regeleinrichtung aus Kabel an ein Außengehäuse zumindest an eine der Stabilisatorenhälften geführt.

Ein elektromechanischer Stellantrieb ist aus einer Information der Firma Silver Atena im Internet mit dem Titel "Elektromechanischer Wankstabilisator, Aktiver Zentralstabilisator zur Verbesserung der Fahrdynamik", Seiteninformation modifiziert am 03. Juni 2012 bekannt. Dabei besteht das Außengehäuse aus einem ersten zylindrisch ausgebildeten und einem zweiten kubisch gestalteten Abschnitt. An zwei eben verlaufenden Flächen des kubischen Abschnittes sind um einen Winkel von 90° zueinander versetzte erste Anschlüsse vorgesehen, von welchen zum einen zwei Kabel und zum anderen ein Kabel ausgehen, die an ihrem anderen Ende in einem Stecker zusammengefasst sind. Von dem ersten Anschluss aus verlaufen die Kabel zunächst parallel zu einer durch die Stabilisatorenhälften und das Außengehäuse verlaufenden Längsachse und gehen dann, zueinander gespreizt, in einen helixartigen Verlauf über. In einem Bereich, in dem die Kabel des Kabelstrangs zur Verbindung mit dem Stecker gebündelt sind, geht der helixartige Verlauf in einen Radius über. Vor dem Übergang des Kabelstranges in den Stecker ist dieser unter einem Winkel zu der Längsachse des Außengehäuses und der Stabilisatorenhälften ausgerichtet.

Aus der US 2008/0106055 A1 ist ebenfalls ein elektromechanischer Stellantrieb bekannt, der als elektromechanischer Wankstabilisator ausgeführt ist. Der elektromechanische Stellantrieb weist ein Außengehäuse auf, welches eine Drehbewegung um seine Längsmittelachse ausführt und welches eine Anschlussbuchse zum Verbinden einer elektrischen Zuleitung und/oder elektrischen Steuerleitung aufweist.

Außerdem sind aus den Druckschriften JP H09 19127 A, EP 1 746 708 A2, FR 2 925 619 A1, US 2007/210666 A1, US 2011/005264 A1 und DE 20 2004 002254 U1 Kabelstränge bekannt, die das Verbinden einer rotatorisch bzw. translatorisch bewegbaren Komponente mit einer starr angeordneten Komponente ermöglichen.

Ein gattungsgemäßer elektromechanischer Stellantrieb ist aus der DE 10 2008 041 329 A1 bekannt. Auch die WO 02/061922 A1 beschreibt eine derartige Anordnung eines Stellantriebes, der insbesondere in der Produktionstechnik eingesetzt wird. Hierbei ist trotz der gattungsgemäßen Ausbildung insbesondere der Bereich des Kabelstranges, der die Verbindung des Kabelstranges mit dem Gehäuse darstellt, hohen Belastungen ausgesetzt. Um diese Belastungen aufzufangen, ist eine komplexe, schwer zu montierende Anordnung vorgesehen.

Es ist Aufgabe der vorliegenden Erfindung, einen Kabelstrang derart zwischen einem rotativ bewegten Außengehäuse, einem Teil desselben oder einem drehfest mit dem Außengehäuse verbundenen zylindrischen Bauelement und einem ortsfesten Anschluss verlaufend anzuordnen, dass dieser Kabelstrang im Betrieb des elektromechanischen Stellantriebes trotz der Relativbewegungen des Außengehäuses nicht beschädigt wird. Weiterhin sollen der Kabelstrang sowie dessen endseitigen Anschlüsse einen möglichst geringen radialen Bauraum beanspruchen und einfach herzustellen sein.

Diese Aufgabe wird, ausgehend vom Oberbegriff des Patentanspruchs 1, durch dessen kennzeichnende Merkmale gelöst. Die darauf folgenden abhängigen Patentansprüche geben jeweils vorteilhafte Weiterbildungen der Erfindung wieder.

Gemäß dem kennzeichnenden Teil des Patentanspruchs 1 soll der erste Anschluss als erster Stecker ausgebildet sein, wobei das Außengehäuse unter Bildung einer kreisringförmigen Stirnfläche mit dem zylindrischen Bauelement verbunden ist, wobei der erste Stecker mit in Richtung der Stirnfläche verlaufenden Steckkontakten versehen ist. Über diesen Stecker, der entsprechend der Anzahl der im Kabelstrang vereinten Leitungen Steckkontakte aufweist, kann eine Verbindung mit einer am Außengehäuse vorgesehenen Steckdose hergestellt werden. Hierbei soll das Außengehäuse unter Bildung einer kreisringförmigen Stirnfläche mit dem zylindrischen Bauelement verbunden sein, wobei der erste Stecker mit in Richtung der Stirnfläche verlaufenden Steckkontakten versehen ist. Das bedeutet, dass die einzelnen Leitungen des Kabelstrangs, wie bereits dargelegt, tangential oder radial zum zylindrischen Bauelement in den Stecker geführt sind, während die Steckkontakte zu dem Kabelstrang im rechten Winkel verlaufen. In der Stirnfläche befindet sich folglich eine entsprechende Steckdose, in die der Winkelstecker, der vorzugsweise gegenüber der Steckdose abgedichtet ist, eingesteckt wird. Zur Sicherheit können am Stecker Sicherungselemente vorgesehen sein, über die der Stecker derart an der Stirnfläche fixiert ist, dass er sich nicht selbsttätig lösen kann.

Soweit in den Patentansprüchen von einem Außengehäuse die Rede ist, soll dieses Außengehäuse oder ein Teil desselben bei einer Aktivierung des Stellantriebes eine Drehbewegung ausführen, so dass sich in entsprechender Weise auch die Lage des ersten Anschlusses verändert.

Die einzelnen Kabel des Kabelstrangs, die, wie bereits dargelegt, als elektrische Zuleitung und/oder elektrische Steuerleitung ausgebildet sind, gehen somit vom ersten Anschluss, tangential oder konzentrisch zum Außengehäuse oder zum zylindrischen Bauelement, aus, um anschließend in Umfangsrichtung einer dieser Baueinheiten zu verlaufen. Bei den ersten vom Anschluss ausgehenden Abschnitten kann es sich demzufolge um gerade oder gekrümmt verlaufende Kabelabschnitte handeln. Diese liegen in einer Querebene mit den sich daran anschließenden Kabelabschnitten, die das Außengehäuse oder das zylindrische Bauelement zumindest partiell umschließen oder weisen den Verlauf einer Helix auf.

Wenn der erste Anschluss am Außengehäuse vorgesehen ist und der Kabelstrang das Außengehäuse an dessen Außenmantel zumindest partiell umgibt, ist es sinnvoll, den ersten Anschluss in einer Mulde des Außengehäuses vorzusehen und den Kabelbaum in einem Bereich des Außengehäuses anzuordnen, in welchem dessen Außendurchmesser reduziert ist, so dass die Anordnung des ersten Anschlusses und des Kabelstranges die radialen Abmessungen des elektromechanischen Stellantriebes aufgrund der Anordnung des Kabelstranges nicht vergrößert.

Von dem Außengehäuse soll, wie weiterhin angegeben, aber auch ein konzentrisch verlaufendes zylindrisches Bauelement ausgehen, das einen im Vergleich zum Außengehäuse geringeren Außendurchmesser aufweist. In diesem Fall soll der erste Anschluss für den Kabelstrang radial zu diesem zylindrischen Bauelement angeordnet sein, so dass das entsprechende von diesem ausgehende erste Ende des Kabelstrangs tangential oder konzentrisch zur Außenmantelfläche des zylindrischen Bauelements verläuft. Auch in diesem Fall werden die radialen baulichen Abmessungen des Stellantriebes durch die Anordnung des Kabelstrangs, der in diesem Fall das zylindrische Bauelement zumindest partiell umschließt, nicht vergrößert, und es besteht folglich nicht das Risiko, dass der bogenförmig verlaufende Kabelstrang, der sich je nach Drehrichtung des Stellantriebes aufweitet oder zusammenzieht, an angrenzende Bauteile anstößt und dort beschädigt wird. Da der Kabelstrang, ausgehend vom ersten Anschluss, in einer Querebene in Umfangsrichtung geführt ist, treten an den Kabeln und am ersten Anschluss keine Torsionsmomente auf, die anderenfalls diese Bauteile beschädigen würden. Somit lassen sich erfindungsgemäß eine Leitungsführung und Leitungsanbindung realisierten, die kollisionsfrei, biegewechselfest sowie temperaturbeständig gestaltet werden kann und folglich eine hohe Lebensdauer besitzt.

Alternativ kann der Kabelstrang, ausgehend von diesem Bereich, den Verlauf einer Helix aufweisen. Hierbei soll sich demnach der Kabelstrang, ausgehend von dem ersten tangential oder konzentrisch zur Außenmantelfläche des zylindrischen Bauelements verlaufenden Abschnitt, schraubenförmig bis zum zweiten Anschluss erstrecken. In diesem Fall wird erreicht, dass in den Leitungen und am ersten Anschluss allenfalls geringe Torsionsmomente auftreten. Weiterhin liegt der Kabelstrang, der als Helix verläuft, geschützt in dem durch die Durchmesserreduzierung des zylindrischen Bauelements geschaffenen radialen Bauraumes. Das Außengehäuse und das zylindrische Bauelement können dabei auch drehfest miteinander verbunden sein, so dass das zylindrische Bauelement den ersten Anschluss aufnimmt und eine Leitungsverbindung in das Innere des Außengehäuses hergestellt ist.

Demgegenüber ist der Kabelstrang nach der Veröffentlichung "Silver Atena, Elektromechanischer Wankstabilisator; Aktiver Zentralstabilisator zur Verbesserung der Fahrdynamik" aufgespreizt, wobei zwei Kabel mit einem ersten Anschluss und ein weiteres Kabel mit einem zum ersten Anschluss um 90° versetzten zweiten Anschluss verbunden sind. Dabei kommen an den beiden Anschlüssen Kabelabgänge zustande, die jeweils parallel zur Längsmittelachse des Stellantriebes verlaufen und dann unter einem Radius in einen helixartigen Verlauf übergehen. Die Folge davon ist, dass sowohl in den Kabeln als auch in den beiden Anschlüssen während einer Drehbewegung des Außengehäuses starke Torsionsmomente auftreten, die zu vorzeitigen Schäden in den Anschlüssen und an den Kabeln führen. Außerdem beanspruchen diese Kabelanbindung sowie dieser Kabelverlauf einen zusätzlichen Bauraum, der zumeist nicht zur Verfügung steht. Der erhöhte Bauraumbedarf ist eine Folge davon, dass der Kabelstrang sich radial außerhalb des Außendurchmessers des Stellantriebes erstreckt. Ein entsprechender Bauraum, innerhalb dessen der Kabelstrang ohne die Gefahr von Beschädigungen verlaufen kann, steht in vielen Anwendungen, insbesondere in Kraftfahrzeugen, nicht zur Verfügung.

Im Rahmen der vorliegenden Erfindung ist weiterhin vorgesehen, den ersten Anschluss als Stecker auszubilden.

Weiterhin wird vorgeschlagen, dass der Kabelstrang zumindest zwei als elektrische Zuleitung und/oder elektrische Steuerleitung ausgebildete Kabel aufweist, die über zumindest einen Halter zueinander geführt sind. Dieser Halter dient dazu, die einzelnen Kabel bzw. Leitungen derart zueinander zu führen, dass sie nicht aneinander scheuern können und dadurch beschädigt werden. Der oder die Halter sind vorzugsweise mit einer zusätzlichen Nut versehen, in der eine Sensorleitung geführt ist. Diese Sensorleitung verbindet einen am Außengehäuse vorgesehenen Sensor mit dem zweiten Anschluss und wird daher nicht in den ersten Anschluss bzw. nicht in den ersten Stecker geführt. Im Übrigen kann diese Sensorleitung auch an dem als Kunststoffumspritzung des ersten Endes des Kabelstranges ausgebildeten ersten Anschluss oder Stecker über eine Nut geführt sein.

Außerdem besteht die Möglichkeit, den ersten Stecker mittels einer Schelle am zylindrischen Bauelement zu befestigen. Diese Schelle, die einen entsprechenden Abschnitt des zylindrischen Bauelements radial umschließt, kann dabei in die Kunststoffumspritzung des ersten Steckers mit einbezogen sein. Weiterhin besteht die Möglichkeit, an der Schelle zumindest eine flanschartige Fläche vorzusehen, über die die Schelle mittels einer Schraubverbindung an der zwischen dem Außengehäuse und dem zylindrischen Bauelement verlaufenden Stirnfläche fixiert wird.

Weiterhin kann der erste Stecker an seiner äußeren Mantelfläche mittels eines Schutzbleches abgedeckt sein. Neben dieser Abdeckfunktion soll dieses Schutzblech die Sensorleitung fixieren, die, wie zuvor erläutert, innerhalb einer Nut des ersten Steckers verläuft.

Eine Kabelverbindung, die weitgehend frei von Torsionsmomenten ist, kann im Übrigen dadurch erreicht werden, dass der zweite Anschluss als zweiter Stecker mit im Wesentlichen in axialer Richtung des Außengehäuses bzw. des zylindrischen Bauelements verlaufenden Steckkontakten ausgebildet ist. Im Falle eines Steckers handelt es sich folglich ebenfalls um einen Winkelstecker, der aber auch durch einen unlösbaren zweiten Anschluss ersetzt sein kann, innerhalb dessen eine Leitungsverbindung unter einem Winkel von 90° erfolgt. Darüber hinaus besteht natürlich auch die Möglichkeit, den Stecker mit Steckkontakten zu versehen, die im Wesentlichen in der gleichen Richtung verlaufen, wie die in den zweiten Stecker hineingeführten Kabel.

In weiterer Ausgestaltung der Erfindung ist vorgesehen, dass zumindest eines der Kabel mit einer Leitungsschirmung versehen ist. In den beiden Anschlüssen bzw. den in diesem Rahmen vorgesehenen Steckern müssen folglich Kontakte vorgesehen sein, über welche die Schirmung übertragen wird.

Weiterhin sollen das Außengehäuse des Stellantriebes und/oder das zylindrische Bauelement gegenüber einem ortsfesten Anlenkpunkt, mit dem der zweite Anschluss verbunden ist, um einen Winkel von insgesamt zumindest 45° verdrehbar sein. Während dieser Drehbewegung von einer Maximalposition in die andere Maximalposition kommt es zu einem Kabelatmen, d. h., in einem Fall weitet sich die entsprechende um das Außengehäuse oder das zylindrische Bauelement verlaufende Schlinge des Kabelstrangs auf und im anderen Fall zieht sie sich soweit zusammen, dass sie mit einem geringen radialen Abstand zur äußeren Mantelfläche des Außengehäuses oder des zylindrischen Bauelements verläuft.

In weiterer Ausgestaltung der Erfindung ist vorgesehen, den mit einer entsprechenden Anbindung und einem Verlauf eines Kabelstrangs versehenen Stellantrieb als Aktuator eines in einem Kraftfahrzeug vorgesehenen Wankstabilisators zu verwenden. Dabei kann der erste Anschluss, der als Stecker oder als fester Anschluss ausgebildet ist, am Außengehäuse und/oder an dem als Stabilisatorenhälfte ausgebildeten zylindrischen Bauelement befestigt sein. Ein entsprechender aktiver Wankstabilisator weist zwei Stabilisatorenhälften auf, die von dem Aktuator ausgehen und jeweils mit einer Radaufhängung des Kraftfahrzeugs verbunden sind. Mittels entsprechender Verstellung der Stabilisatorenhälften wird erreicht, dass eine Karosserieneigung, die aus einer bei Kurvenfahrt auftretenden Querbeschleunigung resultiert, ausgeglichen werden kann. Zu diesem Zweck werden die Stabilisatorenhälften unter Erzeugung eines Torsionsmoments zueinander verdreht, so dass dem Wanken der Karosserie entgegengewirkt wird. In einer derartigen Anwendung eines elektromechanischen Stellantriebes treten insbesondere folgende Probleme auf:
1. Im Bereich des Motorraums und des Abgasstranges steht nur ein sehr begrenzter Einbauraum für einen derartigen elektromechanischen Stellantrieb zur Verfügung und dieser ist starken Temperaturen sowie erheblichen Vibrationen ausgesetzt.
2. Die Leitungsanschlüsse müssen mit einer Dichtigkeit ausgebildet sein, dass kein Wasser in diese eindringen kann, sei es Spritzwasser oder sei es ein stehendes oder fließendes Gewässer, das von dem Kraftfahrzeug durchfahren wird.
3. Im Rahmen eines aktiven Wankausgleichs muss der Aktuator laufend Verstellungen in unterschiedlichen Richtungen durchführen, wobei die Anschlüsse und der Kabelstrang, der vorzugsweise drei Kabel aufweist, zur Erzielung einer ausreichenden Lebensdauer so gering wie möglich mechanisch belastet werden sollen. Dabei muss auch verhindert werden, dass die einzelnen Kabel des Kabelstrangs aneinander scheuern und dadurch beschädigt werden.

Alle diese Voraussetzungen werden durch die erfindungsgemäße Anordnung des Kabelstrangs an einem Aktuator eines Wankstabilisators erfüllt, denn radial zur Stabilisatorhälfte steht ein ausreichender Bauraum zur Verfügung, der Stecker ist optimal abgedichtet und aufgrund der Kabelanbindung und -führung werden die mechanischen Belastungen stark reduziert..

Weiterhin ist vorgesehen, dass die mechanische Verstelleinrichtung des Aktuators als hochübersetztes Planetengetriebe oder als hochübersetztes Wellgetriebe ausgebildet ist. In beiden Fällen wird die relativ hohe Drehzahl des Elektromotors in eine rotative Stellbewegung untersetzt, die von den beiden Statorhälften auf die Einzelradaufhängung übertragen wird. Bei einem Zykloidgetriebe oder Wellgetriebe, das zur starken Untersetzung der Antriebsdrehzahl des Elektromotors dient, befinden sich eine Innenverzahnung eines Hohlrades und eine Außenverzahnung eines Rades oder einer zylindrischen Stahlbüchse teilweise im Eingriff, wobei die Zähnezahlen derart voneinander abweichen, dass beispielsweise bei hundert Umdrehungen eines das Innenrad antreibenden Exzenters oder einer elliptischen Scheibe das äußere Hohlrad nur um den Weg eines Zahnes verdreht wird.

Die Erfindung ist nicht auf die angegebene Kombination der Merkmale des unabhängigen Patentanspruches 1 und der abhängigen Patentansprüche beschränkt. Es ergeben sich darüber hinaus Möglichkeiten, auch einzelne Merkmale, soweit sie aus den Patentansprüchen, der nachfolgenden Beschreibung der Ausführungsbeispiele oder unmittelbar aus der Zeichnung hervorgehen, miteinander zu kombinieren. Die Bezugnahme der Patentansprüche auf die Zeichnung durch die Verwendung von Bezugszeichen soll den Schutzumfang der Patentansprüche nicht beschränken.

Weitere Merkmale der Erfindung ergeben sich im Übrigen aus der nachfolgenden Beschreibung und aus den Zeichnungen, in denen zwei Ausführungsbeispiele der Erfindung vereinfacht dargestellt sind. Es zeigen:
- Fig. 1: eine perspektivische Darstellung eines mit einem erfindungsgemäßen Kabelstrang versehenen elektromechanischen Stellantriebes, der als Aktuator eines aktiven Wankstabilisators dient,
- Fig. 2: eine perspektivische Darstellung des gemäß der Fig. 1 verwendeten Kabelstrangs, der mit einem ersten und einem zweiten Stecker verbunden ist,
- Fig. 3: eine perspektivische Darstellung eines erfindungsgemäß mit einem elektromechanischen Stellantrieb verbundenen Kabelstrangs ohne einen zweiten Stecker oder Anschluss, wobei ein erster Anschluss mit einer Abdeckung versehen ist,
- Fig. 4: einen Längsschnitt durch eine Fixierung eines ersten Steckers an einem zylindrischen Bauelement und einen Verlauf von Steckkontakten in das Innere eines Außengehäuses des elektromechanischen Stellantriebes,
- Fig. 5: eine schematische Darstellung eines ersten Verlaufs des erfindungsgemäßen Kabelstrangs,
- Fig. 6: eine schematische Darstellung eines zweiten Verlaufs eines erfindungsgemäßen Kabelstrangs,
- Fig. 7: eine schematische Darstellung eines dritten Verlaufs eines erfindungsgemäßen Kabelstrangs und
- Fig. 8: eine schematische Darstellung eines vierten Verlaufs eines Kabelstrangs, bei welchem dieser in Form einer Helix verläuft.

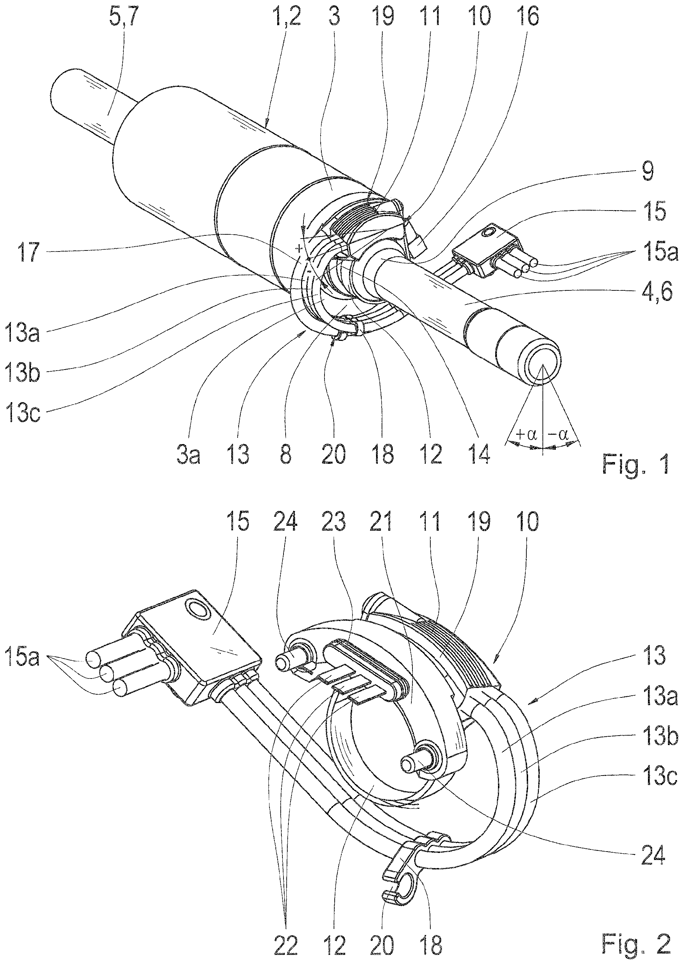

In der Fig. 1 ist mit 1 ein elektromechanischer Stellantrieb bezeichnet, der als Aktuator 2 eines aktiven Wankstabilisators für Kraftfahrzeuge dient. Dieser Aktuator 2 besteht aus einem Außengehäuse 3 und zwei zu diesem konzentrisch verlaufenden zylindrischen Bauelementen 4 und 5, die im vorliegenden Fall als Stabilisatorhälften 6 und 7 vorgesehen sind. Im Inneren des Außengehäuses 3 befinden sich ein nicht näher dargestellter Elektromotor sowie ein hochübersetztes Getriebe, mit welchen die Stabilisatorhälften 6 und 7 in unterschiedlichen Drehrichtungen verdreht werden können. Das zylindrische Bauelement 4, das in der vorliegenden Anwendung auch als Stabilisatorhälfte 6 bezeichnet wird, ist drehfest mit dem Außengehäuse 3 verbunden. Zu diesem Zweck weist das Außengehäuse 3 einen kreisringförmigen Abschnitt 3a auf, der eine ringförmige Stirnfläche 8 bildet.

Bestandteil des zylindrischen Bauelements 4 bzw. der Stabilisatorhälfte 6 ist ein Bund 9, der durch eine radiale Erweiterung der Stabilisatorhälfte 6 hergestellt ist. Auf diesem Bund 9 ist ein erster Anschluss 10 angeordnet, der aus einem ersten Stecker 11 mit einer diesen auf dem Bund 9 fixierenden Schelle 12 besteht. In das Innere des ersten Steckers 11 ist ein Kabelstrang 13 geführt, der aus Kabeln 13a, 13b und 13c besteht. Im ersten Stecker 11 sind die entsprechenden Enden dieser Kabel 13a bis 13c derart geführt, dass sie im Wesentlichen tangential zu einer Außenmantelfläche 14 des Bundes 9 und somit auch tangential zum zylindrischen Bauelement 4 bzw. der Stabilisatorhälfte 6 verlaufen.

Ausgehend von den im ersten Stecker 11 geführten tangential angeordneten Endbereichen der Kabel 13a bis 13c verlaufen diese bogenförmig in einer Ebene mit ihren Endbereichen, um schließlich in einen im Wesentlichen geraden Abschnitt überzugehen, an dessen Ende sie mit einem zweiten Stecker 15 verbunden sind. Dieser zweite Stecker 15 dient zur Verbindung mit einer nicht näher dargestellten ortsfesten Steckdose am Chassis eines Kraftfahrzeugs. An der ringförmigen Stirnfläche ist außerdem eine Sensoreinheit 16 angeordnet, von der ein Sensorkabel 17 ausgeht. Wie weiterhin aus der Fig. 1 hervorgeht, sind die Kabel 13a, 13b und 13c über einen Halter 18 zueinander geführt. Das von der Sensoreinheit 16 ausgehende Sensorkabel 17 weist Führungen im ersten Stecker 11 und in dem Halter 18 auf, wobei zu diesem Zweck im Stecker 11 eine Nut 19 und im Halter 18 eine Nut 20 vorgesehen sind.

Ferner ist der zweite Stecker 15 ebenfalls als Winkelstecker ausgebildet, d. h. Steckkontakte 15a dieses Steckers 15 verlaufen unter einem Winkel von 90° zu den in diesen Steckern angeordneten Kabeln 13a, 13b und 13c. Wie weiterhin aus der Fig. 1 hervorgeht kann die aus dem Außengehäuse 3 der ringförmigen Stirnfläche 8 und der Stabilisatorhälfte 6 bestehende Einheit aus einer Grundstellung heraus eine Drehbewegung um einen Winkel + α oder einen Winkel - α ausführen.

Den weiteren Fig. 2 bis 7 sind weitere Einzelheiten dieser Anordnung zu entnehmen.

Die Fig. 2 zeigt als Einzeldarstellung den Kabelstrang 13 mit dem ersten Stecker 11 und dem zweiten Stecker 15. Der Darstellung kann außerdem entnommen werden, dass der erste Stecker 11 ein Flanschteil 21 aufweist, von dem Steckkontakte 22 des ersten Steckers 11 ausgehen. Diese Steckkontakte 22 sind von einer ovalen Dichtung 23 umschlossen. Außerdem weist das Flanschteil 21 Führungsstifte 24 auf, die sich in axialer Richtung erstrecken.

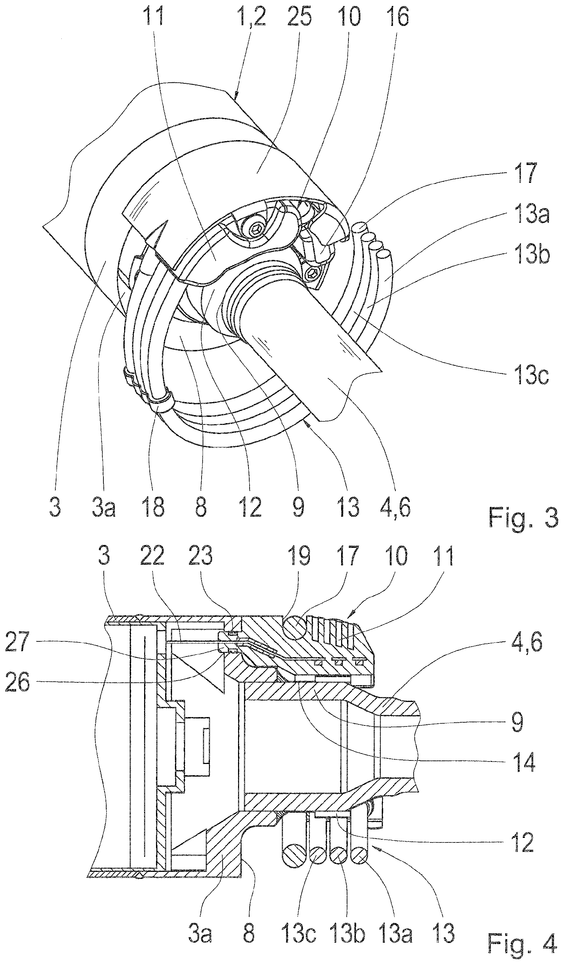

Die Steckkontakte 22 des ersten Steckers 11 sind, wie in Verbindung mit der nachfolgenden Fig. 4 zu erkennen ist, in eine an der ringförmigen Fläche 8 des Außengehäuses 3 vorgesehene Steckdose einführbar, so dass eine Verbindung des jeweiligen Kabels 13a, 13b oder 13c mit dem Elektromotor und bestimmten Steuereinrichtungen, die innerhalb des Außengehäuses 3 angeordnet sind, herstellbar ist. Wenn diese Steckverbindung hergestellt ist, liegt die Dichtung 23 in einer entsprechenden an der Steckdose vorgesehenen Öffnung an, um das Innere der Steckdose und somit das Innere des Außenghäuses 3 gegen Spritzwasser und sonstiges die Einrichtung umgebendes Wasser zu schützen.

Gemeinsam mit dem Einführen dieser Steckkontakte werden auch die Führungsstifte 24 in entsprechende Aufnahmebohrungen, die in dem kreisringförmigen Abschnitt 3a des Außengehäuses 3 vorgesehen sind, eingeführt, so dass das Flanschteil 21 insgesamt positioniert ist. Dabei können noch zusätzliche Schrauben vorgesehen sein, mit denen das Flanschteil 21 an der ringförmigen Stirnfläche 8 fixiert wird. Im Übrigen ist der erste Stecker 11 über die Schelle 12 auf dem Abschnitt 9 geführt. Weiterhin geht aus der Fig. 2 die Ausbildung des Halters 18 hervor, der mit der Nut 20 versehen ist, während am ersten Stecker 11 die entsprechende Nut 19 ausgebildet ist. Die Fig. 2 lässt ferner erkennen, dass der Kabelstrang 13 in einer Ebene mit dem ersten Stecker 11 angeordnet ist und sich somit bei einer Drehung der den ersten Stecker 11 mitnehmenden Stabilisatorhälfte 6 und gleichzeitiger Festlegung des zweiten Steckers 15 am Chassis des Kraftfahrzeugs nur seine Krümmung ändert, also die Kabel 13a, 13b und 13c des Kabelstranges 13 keinen Torsionskräften ausgesetzt sind.

Die bereits im Zusammenhang mit den Fig. 1 und 2 beschriebenen Details lassen sich im Wesentlichen auch der Fig. 3 entnehmen, nach der an dem Stecker 11 ein Schutzblech 25 befestigt ist, das den Stecker 11 radial umgibt und dabei auch das Sensorkabel 17 am Stecker 11, also in dessen Nut 20 fixiert.

Weiterhin geht aus der Fig. 4 ein Längsschnitt durch die Anordnung des ersten Steckers 11 im Abschnitt 3a des Außengehäuses 3 hervor. Zu diesem Zweck ist der kreisringförmige Abschnitt mit einer Öffnung 26 versehen, durch die die Steckkontakte 22 hindurchgeführt sind. Außerdem ist ersichtlich, dass bei dieser Anordnung kein separates Flanschteil am Stecker 11 vorgesehen ist, sondern dieser unmittelbar an der ringförmigen Stirnfläche 8 anliegt. Die Steckkontakte 22 sind dabei in einer Fassung 27 angeordnet, wobei diese Fassung von der die Öffnung 26 umschließenden Dichtung 23 umgeben ist. Ferner geht aus dieser Fig. 4 der Verlauf der Kabel 13a, 13b und 13c des Kabelstrangs 13 hervor, wobei deutlich wird, dass diese Kabel 13a bis 13c sowie das Sensorkabel 17 in einer Ebene mit ihren Führungen in den ersten Stecker 11 liegen.

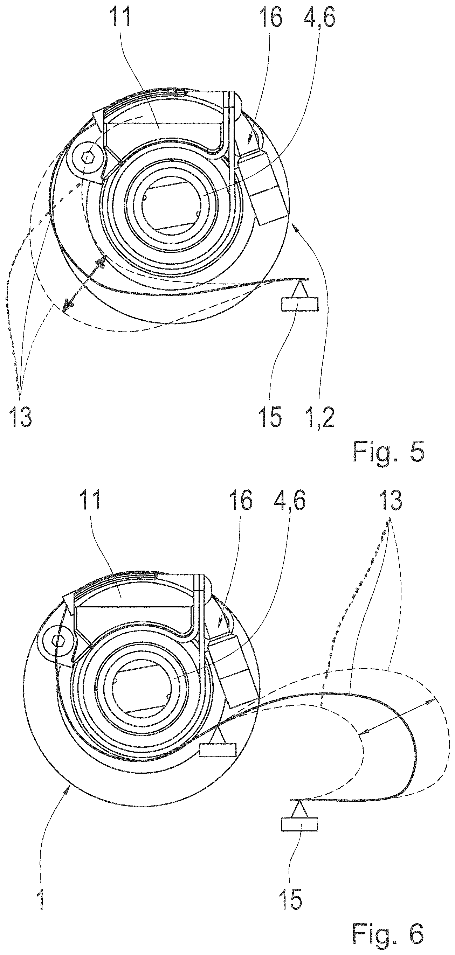

Aus den Fig. 5, 6 und 7 gehen jeweils unterschiedlicher Verläufe des Kabelstranges 13 zum zweiten Stecker 15 hervor. Dabei ist sichtbar, wie der Kabelstrang 13, der in einer Ebene mit dem ersten Stecker 11 zum zweiten schematisch dargestellten Stecker 15 verläuft, bei einer Verdrehung des Aktuators 2 aus seiner Mittelstellung heraus in seine beiden Maximalpositionen seine Lage verändert. Diese Lageveränderung wird auch als "Kabelatmen" bezeichnet. Je nach Führung des Kabelstranges 13 kann sich ein Durchhang des Kabelstranges 13 an unterschiedlichen Stellen bilden, was gezielt bestimmt werden kann.

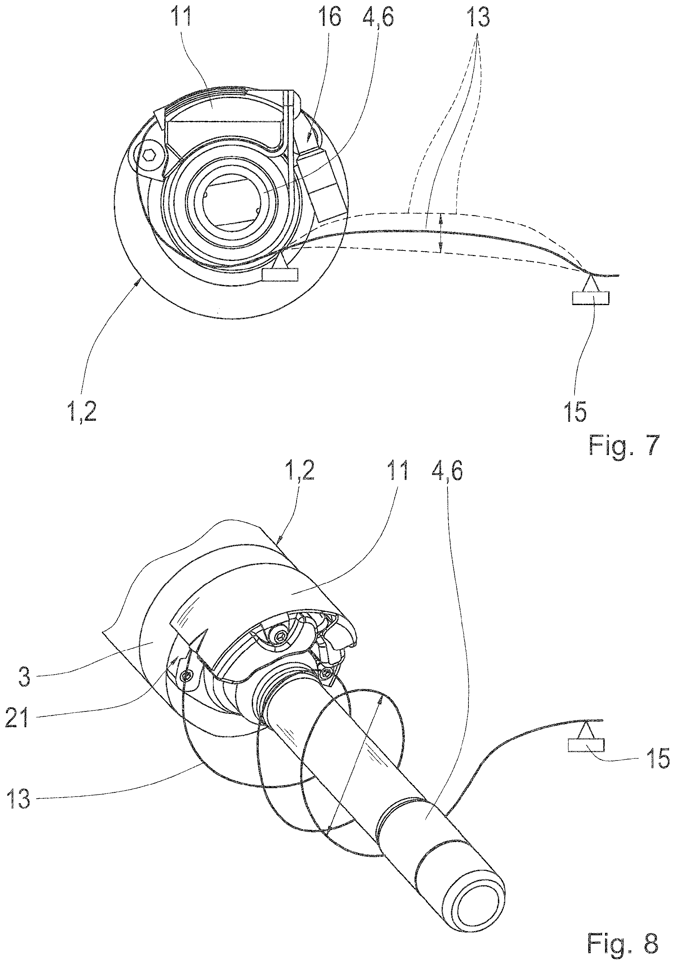

Schließlich geht aus der Fig. 8 eine alternative Lösung hervor, bei der der Kabelstrang 13 schraubenförmig um die Stabilisatorhälfte 6 herumgeführt ist, also den Verlauf einer Helix aufweist. Auch in diesem Zusammenhang ist in der Fig. 8 das "Kabelatmen" dargestellt.

Aus den Darstellungen geht hervor, dass mit der erfindungsgemäßen Lösung, bei der die Anbindung des Kabelstrangs 13 an die Stabilisatorhälfte 6 und somit an das Außengehäuse 3 tangential oder konzentrisch sowohl ausgeführt sein kann, eine Übertragung von Torsionsmomenten auf den Kabelstrang 13 vermieden wird. Außerdem verlaufen die einzelnen Kabel 13a bis 13c sowie das Sensorkabel 17 parallel zueinander, so dass sie nicht aneinander scheuern können. Mit dieser Systemlösung können Anordnungen in Kraftfahrzeugen realisiert werden, bei welchen je nach Fahrzeugtyp für die Anordnung eines aktiven Wankstabilisators sehr unterschiedliche Bauräume zur Verfügung stehen.

Für zumindest eines der Kabel 13a bis 13c ist eine niederohmige Schirmübergabe vorgesehen. Die jeweilige Schirmung der Einzelleitung 13a, 13b, 13c wird im ersten Stecker 11 auf Steckkontakten zusammengelegt und in das Aggregat geleitet. Im Aggregat wird die Schirmung dann niederohmig übergeben. Da der Aktuator 2 derart ausgelegt sein muss, dass er unterhalb der Watt-Grenze betrieben werden kann, ist der erste Stecker 11 mit der Dichtung 23 versehen, über die er in das Innere des Außengehäuses geführt ist. Um den Bauraum- und Volumenanforderungen gerecht zu werden, muss eine definierte Kabelbewegung bzw. Kabeldynamik im Fahrzeug eingehalten werden. Die Kabelbewegung kann nach Festlegung des Übergabepunkts am Chassis, also der Anordnung des zweiten Steckers 15 und des Drehwinkels exakt definiert werden. Daraus resultiert dann das in den Fig. 5 bis 8 dargestellte und zu diesen beschriebene "Kabelatmen".

### Bezugszeichen

- 1: elektromechanischer Stellantrieb
- 2: Aktuator
- 3: Außengehäuse
- 3a: kreisringförmiger Abschnitt von 3
- 4: zylindrisches Bauelement
- 5: zylindrisches Bauelement
- 6: Stabilisatorhälfte
- 7: Stabilisatorhälfte
- 8: kreisringförmige Stirnfläche an 3a
- 9: Bund von 4, 6
- 10: erster Anschluss
- 11: erster Stecker
- 12: Schelle
- 13: Kabelstrang
- 13a: Kabel
- 13b: Kabel
- 13c: Kabel
- 14: Außenmantelfläche von 9
- 15: zweiter Stecker
- 15a: Steckkontakte von 15
- 16: Sensoreinheit
- 17: Sensorkabel
- 18: Halter
- 19: Nut in 11
- 20: Nut in 18
- 21: Flanschteil
- 22: Steckkontakte
- 23: Dichtung
- 24: Führungsstifte
- 25: Schutzblech
- 26: Öffnung
- 27: Fassung

## Patentansprüche

1. Elektromechanischer Stellantrieb (1), bei welchem ein Außengehäuse (3), ein Teil desselben und/oder ein drehfest mit dem Außengehäuse verbundenes zylindrisches Bauelement (4) eine Drehbewegung um seine Längsmittelachse ausführt, wobei ein aus zumindest einer elektrischen Zuleitung und/oder elektrischen Steuerleitung (13a, 13b, 13c) bestehender Kabelstrang (13) an seinem ersten Ende mit einem am Außengehäuse (3) vorgesehenen ersten Anschluss (10) und an seinem zweiten Ende mit einem zweiten ortsfesten Anschluss (15) verbunden ist, wobei das erste Ende des Kabelstranges (13) im Bereich des ersten Anschlusses (10) tangential oder konzentrisch zu einer Außenmantelfläche (14) des Außengehäuses (3) oder des mit diesem drehfest verbundenen zylindrischen Bauelements (4) verläuft, dessen Außendurchmesser gegenüber dem des Außengehäuses (3) reduziert ist, so dass eine Anordnung des ersten Anschlusses (10) und des Kabelstranges (13) die radialen Abmessungen des elektromechanischen Stellantriebes (1) aufgrund der Anordnung des Kabelstranges (13) nicht vergrößert und dass sich der Kabelstrang (13), ausgehend von diesem Bereich, konzentrisch mit radialem Abstand zur Außenmantelfläche (14) erstreckt, derart, dass ein Aufweiten bzw. Zusammenziehen einer um das Außengehäuse (3) oder das zylindrische Bauelement (4) verlaufenden Schlinge des Kabelstrangs (13) möglich ist, wobei die zumindest eine elektrische Zuleitung und/oder elektrische Steuerleitung (13a, 13b, 13c) jeweils in einer durch den ersten Anschluss (10) verlaufenden Querebene des Außengehäuses (3) oder des zylindrischen Bauelements (4) angeordnet ist oder ausgehend von dem genannten Bereich den Verlauf einer Helix aufweist, **dadurch gekennzeichnet, dass** der erste Anschluss (10) als erster Stecker (11) ausgebildet ist, wobei das Außengehäuse (3) unter Bildung einer kreisringförmigen Stirnfläche (8) mit dem zylindrischen Bauelement verbunden ist, wobei der erste Stecker (11) mit in Richtung der Stirnfläche (8) verlaufenden Steckkontakten (22) versehen ist.

2. Elektromechanischer Stellantrieb nach Patentanspruch 1, **dadurch gekennzeichnet, dass** der Kabelstrang (13) zumindest zwei als elektrische Zuleitung und/oder elektrische Steuerleitung ausgebildete Kabel (13a, 13b, 13c) aufweist, die über zumindest einen Halter (18) zueinander geführt sind.

3. Elektromechanischer Stellantrieb nach Patentanspruch 2, **dadurch gekennzeichnet, dass** der Halter (18) mit einer Aufnahmenut (20) zur Führung eines separaten Sensorkabels (17) versehen ist, wobei das Sensorkabel (17) in einer in Umfangsrichtung verlaufenden Nut (19) des ersten Steckers (11) geführt ist.

4. Elektromechanischer Stellantrieb nach einem der vorhergehenden Patentansprüche, **dadurch gekennzeichnet, dass** der erste Stecker (11) durch eine Kunststoffumspritzung des ersten Endes des Kabelstranges (13) hergestellt ist und dass am Außenumfang des ersten Steckers (11) eine in Umfangsrichtung verlaufende Nut (19) zur Aufnahme eines separaten Sensorkabels (17) vorgesehen ist.

5. Elektromechanischer Stellantrieb nach einem der vorhergehenden Patentansprüche, **dadurch gekennzeichnet, dass** der erste Stecker (11) mittels einer Schelle (12) am zylindrischen Bauelement (4) befestigt ist.

6. Elektromechanischer Stellantrieb nach einem der vorhergehenden Patentansprüche, **dadurch gekennzeichnet, dass** der erste Stecker (11) an seiner äußeren Mantelfläche mittels eines Schutzbleches (25) abgedeckt ist.

7. Elektromechanischer Stellantrieb nach einem der vorhergehenden Patentansprüche, **dadurch gekennzeichnet, dass** der zweite Anschluss als zweiter Stecker (15) mit im Wesentlichen in axialer Richtung des Außengehäuses bzw. des zylindrischen Bauelements verlaufenden Steckkontakten (15a) ausgebildet ist.

8. Elektromechanischer Stellantrieb nach einem der vorhergehenden Patentansprüche, **dadurch gekennzeichnet, dass** zumindest eines der Kabel (13a, 13b, 13c) mit einer Leitungsschirmung versehen ist.

9. Elektromechanischer Stellantrieb nach einem der vorhergehenden Patentansprüche, **dadurch gekennzeichnet, dass** das Außengehäuse (3) des Stellantriebes (1) und/oder das zylindrische Bauelement (4) gegenüber einem ortsfesten Anlenkpunkt, mit dem der zweite Anschluss (15) verbunden ist, um einen Winkel von zumindest 45° verdrehbar sind.

10. Elektromechanischer Stellantrieb nach einem der vorhergehenden Patentansprüche, **dadurch gekennzeichnet, dass** dieser als Aktuator (2) eines in einem Kraftfahrzeug vorgesehenen Wankstabilisators dient, wobei der erste Anschluss am Außengehäuse (3) und/oder an dem als Stabilisatorhälfte (6) ausgebildeten zylindrischen Bauelement (4) befestigt ist.

11. Elektromechanischer Stellantrieb nach Patentanspruch 10, **dadurch gekennzeichnet, dass** eine mechanische Verstelleinrichtung des Aktuators (2) als hochübersetztes Planetengetriebe ausgebildet ist.

12. Elektromechanischer Stellantrieb nach Patentanspruch 10, **dadurch gekennzeichnet, dass** eine mechanische Verstelleinrichtung des Aktuators (2) als hochübersetztes Wellgetriebe ausgebildet ist.

## Claims

1. Electromechanical actuating drive (1), in which an external housing (3), a portion of the said external housing and/or a cylindrical component (4) which is connected to the external housing in a rotationally fixed manner execute/executes a rotational movement about the longitudinal centre axis of the said electromechanical actuating drive, wherein a cable harness (13) which comprises at least one electrical supply line and/or electrical control line (13a, 13b, 13c) is connected, at its first end, to a first connection (10) which is provided on the external housing (3) and, at its second end, to a second stationary connection (15), wherein the first end of the cable harness (13), in the region of the first connection (10), runs tangentially or concentrically in relation to an external lateral surface (14) of the external housing (3) or of the cylindrical component (4) which is connected to the said external housing in a rotationally fixed manner, the outside diameter of which component is reduced in comparison to that of the external housing (3) so that an arrangement of the first connection (10) and of the cable harness (13) does not increase the radial dimensions of the electromechanical actuating drive (1) on account of the arrangement of the cable harness (13), and that the cable harness (13), starting from this region, extends concentrically at a radial distance from the external lateral surface (14) in such a way that expansion or contraction of a loop of the cable harness (13), which loop runs around the external housing (3) or the cylindrical component (4), is possible, wherein the at least one electrical supply line and/or electrical control line (13a, 13b, 13c) is arranged in each case in a transverse plane of the external housing (3) or of the cylindrical component (4), which transverse plane runs through the first connection (10), or, starting from the said region, has the profile of a helix, **characterized in that** the first connection (10) is designed as a first plug (11), wherein the external housing (3) is connected to the cylindrical component so as to form an end face (8) in the form of a circular ring, wherein the first plug (11) is provided with plug-in contacts (22) which run in the direction of the end face (8).

2. Electromechanical actuating drive according to Patent Claim 1, **characterized in that** the cable harness (13) has at least two cables (13a, 13b, 13c) which are designed as an electrical supply line and/or electrical control line and which are guided towards one another by means of at least one holder (18).

3. Electromechanical actuating drive according to Patent Claim 2, **characterized in that** the holder (18) is provided with a receiving groove (20) for guiding a separate sensor cable (17), wherein the sensor cable (17) is guided in a groove (19) of the first plug (11), which groove runs in the circumferential direction.

4. Electromechanical actuating drive according to one of the preceding patent claims, **characterized in that** the first plug (11) is produced by plastic injection-moulding encapsulation of the first end of the cable harness (13), and **in that** a groove (19) for receiving a separate sensor cable (17), which groove runs in the circumferential direction, is provided on the outer circumference of the first plug (11).

5. Electromechanical actuating drive according to one of the preceding patent claims, **characterized in that** the first plug (11) is fastened to the cylindrical component (4) by means of a clip (12) .

6. Electromechanical actuating drive according to one of the preceding patent claims, **characterized in that** the first plug (11) is covered by means of a protective plate (25) on its outer lateral surface.

7. Electromechanical actuating drive according to one of the preceding patent claims, **characterized in that** the second connection is designed as a second plug (15) with plug-in contacts (15a) which run substantially in the axial direction of the external housing or of the cylindrical component.

8. Electromechanical actuating drive according to one of the preceding patent claims, **characterized in that** at least one of the cables (13a, 13b, 13c) is provided with a line shielding.

9. Electromechanical actuating drive according to one of the preceding patent claims, **characterized in that** the external housing (3) of the actuating drive (1) and/or the cylindrical component (4) can be rotated about an angle of at least 45° in relation to a stationary articulation point to which the second connection (15) is connected.

10. Electromechanical actuating drive according to one of the preceding patent claims, **characterized in that** it serves as an actuator (2) of a roll stabilizer which is provided in a motor vehicle, wherein the first connection is fastened to the external housing (3) and/or to the cylindrical component (4) which is designed as a stabilizer half (6).

11. Electromechanical actuating drive according to Patent Claim 10, **characterized in that** a mechanical adjusting device of the actuator (2) is designed as a high-ratio planetary gear mechanism.

12. Electromechanical actuating drive according to Patent Claim 10, **characterized in that** a mechanical adjusting device of the actuator (2) is designed as a high-ratio harmonic drive.

## Revendications

1. Mécanisme de commande électromécanique (1), dans lequel un boîtier externe (3) ou une partie de ce dernier et/ou un composant cylindrique (4) relié solidaire en rotation au boîtier externe effectue un mouvement de rotation autour de son axe central longitudinal, dans lequel un faisceau de câbles (13) constitué d'au moins une ligne d'amenée électrique et/ou d'une ligne de commande électrique (13a, 13b, 13c) est reliée par sa première extrémité à un premier branchement (10) prévu sur le boîtier externe (3) et par sa deuxième extrémité à un deuxième branchement (15) en position stationnaire, dans lequel la première extrémité du faisceau de câbles (13), dans la zone du premier branchement (10), s'étend tangentiellement ou concentriquement par rapport à une surface enveloppante externe (14) du boîtier externe (3) ou du composant cylindrique (4) relié solidaire en rotation à ce dernier, dont le diamètre extérieur est réduit par rapport à celui du boîtier externe (3), de manière à ce qu'un agencement du premier branchement (10) et du faisceau de câbles (13) n'augmente pas les dimensions radiales du mécanisme de commande électromécanique (1) du fait de l'agencement du faisceau de câbles (13) et en ce que le faisceau de câbles (13) s'étend à partir de cette zone de manière concentrique avec une espacement radial par rapport à la surface enveloppante externe (14) de manière à permettre un élargissement ou un resserrement d'une boucle du faisceau de câbles (13) s(étendant autour du boîtier externe (3) ou du composant cylindrique (4), dans lequel ladite au moins une ligne d'amenée électrique et/ou ligne de commande électrique (13a, 13b, 13c) est respectivement disposée dans un plan transversal du boîtier externe (3) ou du composant cylindrique (4) et passant par le premier branchement (10) ou présentant une forme hélicoïdale à partir de ladite zone, **caractérisé en ce que** le premier branchement (10) est réalisé sous la forme d'une fiche (11), dans lequel le boîtier externe (3) est relié au composant cylindrique en formant une surface avant (8) présentant une forme d'anneau circulaire, dans lequel la première fiche (11) est munie de contacts enfichables (22) s'étendant dans la direction de la surface avant (8).

2. Mécanisme de commande électromécanique selon la revendication 1, **caractérisé en ce que** le faisceau du câble (13) comporte au moins deux câbles (13a, 13b, 13c) réalisés sous la forme d'une ligne d'amenée électrique et/ou d'une ligne de commande électrique, qui sont guidés l'un vers l'autre par l'intermédiaire 'au moins un support (18).

3. Mécanisme de commande électromécanique selon la revendication 2, **caractérisé en ce que** le support (18) est muni d'une encoche de réception (20) permettant de guider un câble de capteur (17) séparé, dans lequel le câble de capteur (17) est guidé dans une encoche (19) s'étendant dans la direction circonférentielle de la première fiche (11).

4. Mécanisme de commande électromécanique selon l'une des revendications précédentes, **caractérisé en ce que** la première fiche (11) est produite par enrobage par extrusion de matière plastique de la première extrémité du faisceau de câbles (13) et **en ce qu'**une encoche (19) s'étendant dans la direction circonférentielle est prévue sur la circonférence externe de la première fiche (11) pour recevoir un câble de capteur (17) séparé.

5. Mécanisme de commande électromécanique selon l'une des revendications précédentes, **caractérisé en ce que** la première fiche (11) est fixée au moyen d'une bride de serrage (12) au composant cylindrique (4).

6. Mécanisme de commande électromécanique selon l'une des revendications précédentes, **caractérisé en ce que** la première fiche (11) est recouverte sur sa surface enveloppante externe au moyen d'une tôle de protection (25).

7. Mécanisme de commande électromécanique selon l'une des revendications précédentes, **caractérisé en ce que** le deuxième branchement est réalisé sous la forme d'une deuxième fiche (15) munie de contacts enfichables (15a) s'étendant sensiblement dans la direction axiale du boîtier externe ou du composant cylindrique.

8. Mécanisme de commande électromécanique selon l'une des revendications précédentes, **caractérisé en ce qu'**au moins l'un des câbles (13a, 13b, 13c) est muni d'un blindage de ligne.

9. Mécanisme de commande électromécanique selon l'une des revendications précédentes, **caractérisé en ce que** le boîtier externe (3) du mécanisme de commande (1) et/ou le composant cylindrique (4) peuvent être mis en rotation d'un angle d'au moins 45° par rapport à un point d'articulation en position fixe auquel est relié le deuxième branchement (15).

10. Mécanisme de commande électromécanique selon l'une des revendications précédentes, **caractérisé en ce qu'**il est utilisé en tant qu'actionneur (2) d'un stabilisateur antiroulis prévu dans un véhicule automobile, dans lequel le premier branchement est fixé au boîtier externe (3) et/ou au composant cylindrique (4) réalisé sous la forme d'une moitié de stabilisateur (6) .

11. Mécanisme de commande électromécanique selon la revendication 10, **caractérisé en ce qu'**un dispositif de réglage mécanique de l'actionneur (2) est réalisé sous la forme d'un engrenage planétaire de démultiplication élevée.

12. Mécanisme de commande électromécanique selon la revendication 10, **caractérisé en ce qu'**un dispositif de réglage mécanique de l'actionneur (2) est réalisé sous la forme d'un démultiplicateur harmonique de démultiplication élevée.
